**Europäisches Patentamt**

**European Patent Office**

**Office européen des brevets**

(19)

(11) Veröffentlichungsnummer: **0 038 779**
**A1**

(12) # EUROPÄISCHE PATENTANMELDUNG

(21) Anmeldenummer: **81810145.3**

(22) Anmeldetag: **15.04.81**

(51) Int. Cl.³: **B 01 D 53/34**
**C 01 B 17/60**

(30) Priorität: **21.04.80 CH 3060/80**

(43) Veröffentlichungstag der Anmeldung:
**28.10.81 Patentblatt 81/43**

(84) Benannte Vertragsstaaten:
**AT BE CH DE FR GB IT LI NL SE**

(71) Anmelder: **CIBA-GEIGY AG**
**Patentabteilung Postfach**
**CH-4002 Basel(CH)**

(72) Erfinder: **Fattinger, Volker, Dr.**
**Im Lee 39**
**CH-4144 Arlesheim(CH)**

(72) Erfinder: **Bentz, Rolf, Dr.**
**Haltingerstrasse 75**
**CH-4057 Basel(CH)**

(54) **Verfahren zur Anreicherung von SO2, das aus Abgasen abgetrennt wird.**

(57) Verfahren zum Anreichern von $SO_2$, das aus einem $SO_2$-haltigen Gasstrom mit Hilfe einer wässrigen, ein Aluminiumsalz enthaltenden Absorptionslösung in einer Absorptionszone abgetrennt wird, wobei die Absorptionslösung im Kreislauf zunächst durch eine Absorptionszone und darauf durch eine Desorptionszone geführt wird, aus der unter Vergrösserung der Oberfläche der aus der Absorptionszone erhaltenen $SO_2$-haltigen Flüssigkeit ein wasserdampfhaltiger Gasstrom von angereichertem $SO_2$-Gehalt abgegeben wird, indem erfindungsgemäss

a) als Absorptionslösung eine wässrige Lösung eines basischen Aluminiumsalzes eingesetzt wird, dessen Konzentration an $Al^{3+}$ in der Lösung zwischen 5 und 50 g/1 beträgt,

b) in der Desorptionszone der Absolutdruck zwischen 0,08 und 0,7 bar gehalten wird und

c) die Differenz im $SO_2$-Gehalt der Absorptionslösung vor und nach der Desorptionszone zwischen 0,1 und 10 g/1 beträgt.

EP 0 038 779 A1

./...

Croydon Printing Company Ltd.

CIBA-GEIGY AG                           72-12813/=

Basel (Schweiz)


Verfahren zur Anreicherung von SO$_2$, das aus Abgasen abgetrennt wird


Die Erfindung betrifft ein Verfahren zur Anreicherung von SO$_2$, das aus Abgasen bzw. aus Abluft abgetrennt wird, und dessen Wiedergewinnung in höherer Konzentration.


Im Zuge der Bemühungen zur Reinhaltung der Luft ist das Abtrennen von SO$_2$ aus Abgas- und Abluftströmen ein dringendes Problem. Es sind vielseitige Bemühungen im Gange, um das aus den Abgasen abgetrennte SO$_2$ in verwertbarer Form zu gewinnen. Verfahren, bei denen das SO$_2$ zu nicht mehr weiter verwertbaren Stoffen umgesetzt wird, erscheinen wegen der damit verbundenen Deponie- und/oder Abwasserprobleme, die solche Stoffe verursachen, als Dauerlösung problematisch. Als gut weiterverwendbare Stoffe, in die das SO$_2$ aus den Abgasströmen umgewandelt werden kann, kommen reines SO$_2$ selbst, Schwefelsäure und elementarer Schwefel in Frage. Elementarer Schwefel wird beispielsweise durch den CITREX-Prozess gewonnen, wobei SO$_2$ in einer gepufferten Citratlösung absorbiert wird und wobei in der SO$_2$-beladenen Citratlösung Schwefel mit Hydrogensulfid ausgefällt wird. Siehe z.B. Chemical Engineering Progress, Vol. 71, No. 5, May 1975.


Eine ausserordentlich umfangreiche Literatur befasst sich mit der Umwandlung des Abgas-SO$_2$ in Schwefelsäure. Dies kann nach dem bekannten Kontaktverfahren erfolgen, für kleinere Konzentrationen an Abgas ist jedoch das Stickoxidverfahren ("Nitroseverfahren") von Vorteil. Siehe dazu unter anderem die Deutschen Offenlegungsschriften 26 09 505, 28 30 214 und 28 30 214. Bei allzu tiefen Konzentrationen von SO$_2$ im Abgas ist jedoch auch diese Methode schwierig anzuwenden

- 2 -

bzw. nicht mehr wirtschaftlich.

Für Abgase mit kleinen Konzentrationen an $SO_2$ eignet sich die Anreicherung zu reinem $SO_2$ sehr gut. Auch über diese Methode gibt es umfangreiche Literatur. Eine übersichtliche Zusammenfassung der bekannten Verfahren für die $SO_2$-Anreicherung ist einem Uebersichtsartikel von G.T.Rochelle, erschienen auf dem EPA Symposium on Flue Gas Desulfurization, Hollywood, November 8-11, 1977, zu entnehmen.

Das erfindungsgemässe Verfahren zur Anreicherung von $SO_2$ aus Abgasströmen arbeitet wie auch viele bekannte Verfahren in der Weise, dass der Abgasstrom, gegebenenfalls nach Durchlaufen einer Vorreinigungszone, in eine Absorptionszone geführt wird, in der $SO_2$ von einem geeigneten Medium absorbiert wird, und dass anschliessend das mit $SO_2$ beladene Absorptionsmedium in eine Desorptionszone geführt wird, in der das $SO_2$ wieder aus dem Absorptionsmedium freigesetzt wird, worauf das so abgetrennte $SO_2$ weiterverarbeitet werden kann.

Als Absorptionsmittel sind in der Literatur Wasser, verschiedene organische Verbindungen, Lösungen von organischen Säuren bzw. gepufferte Salzlösungen von organischen Säuren sowie Lösungen von bestimmten anorganischen Salzen beschrieben.

Aus den deutschen Offenlegungsschriften 16 67 745, 15 67 462 und 24 48 056 sind Verfahren zur Abtrennung und Anreicherung von $SO_2$ beschrieben, in denen das $SO_2$ durch Auswaschen mit Wasser aus dem Abgas entfernt wird. Das $SO_2$-haltige Wasser wird sodann in einer Desorptionszone durch Erhitzen oder/und Verminderung des Drucks oder/und Einblasen von Dampf vom $SO_2$ befreit. Das entstehende Dampf/$SO_2$-Gemisch wird durch Auskondensieren des Wassers, gegebenenfalls in mehreren Stufen, an $SO_2$ angereichert. Diese beschriebenen Verfahren haben den Nachteil, dass die Aufnahmekapazität des Wassers für $SO_2$ relativ gering ist und dass daher relativ wenig $SO_2$ absorbiert wird und dann wieder desorbiert werden kann (geringe Transport-

- 3 -

kapazität für $SO_2$). Ferner enthält das entstehende Dampf/$SO_2$-Gemisch relativ wenig $SO_2$, sodass grosse Mengen an Wasserdampf auskondensiert werden müssen, was grosse Energiekosten zur Folge hat.

Wässrige Lösungen von anorganischen oder organischen Säuren bzw. Pufferlösungen als Absorptionsmittel verwendeten Johnstone et al, Ind.Eng.Chem. 30, 101(1938) (Valeriansäure), Rochelle, Electric Power Research Institute Report No. FP-463-SR, July 1977 (Adipinsäure, $K_2S_2O_5$ bzw. $KH_2PO_4$). Die Verwendung von verschiedenen gepufferten wässrigen Lösungen organischer Säuren, insbesondere Glutarsäure, als Absorptionsmittel lehrt die deutsche Offenlegungsschrift 26 23 963, ebenso die deutsche Offenlegungsschrift 29 05 957, nach der zu der Absorptionslösung noch Schwermetallverbindungen zugesetzt werden können. Die Freisetzung des $SO_2$ aus der Absorptionslösung erfolgt in diesen Fällen durch Austreiben mit Wasserdampf und/oder einem Inertgas. Gemäss U.S. Patentschrift 4,140,751 wird als Absorptionsmittel eine gepufferte Citratlösung verwendet, wobei die Desorption des $SO_2$ bei erhöhter Temperatur und Ueberdruck erfolgt. Weitere mögliche Absorbentien sind Phosphat- und Sulfosuccinat-Lösungen.

Auch Lösungen von organischen Basen wurden als Absorptionsmittel vorgeschlagen. Siehe dazu Johnstone et al, Ind. Eng.Chem.30, 101 (1938) (Anilin), Rochelle, Electric Power Research Institute Report No. FP-463-SR July 1977 (Aethylendiamin) und Roberson and Marks, U.S. Bureau of Mines Rep. of Invest. 3415 (1938) (Diäthylentriamin). Diese Absorptionsmedien haben jedoch verschiedene Nachteile. Neben teilweise schlechter Absorptionsfähigkeit für $SO_2$ treten Probleme bei der Desorption auf, da die genannten Verbindungen leicht flüchtig sind.

Zu den bisher praktisch am meisten erprobten Verfahren gehören jene, die mit dem System Sulfit/Bisulfit als Absorptionsmedium arbeiten. Bei der Absorption wird das in der Absorptionslösung vor-

- 4 -

handene Sulfit durch Reaktion mit $SO_2$ in Bisulfit umgewandelt. In der
Regel werden Alkalimetallsulfite wie Na-, K- und Li-Sulfite, aber
auch Erdalkalimetallsulfite, z.B. Be-Sulfite verwendet. Siehe dazu
Johnstone et al, Ind.Eng.Chem. 30, 101 (1938), Deutsche Auslegeschriften 22 08 102 und 20 34 453.

Auch Lösungen von Ammoniumsulfiten und Sulfiten organischer
Amine wie Methylamin, Monoäthanolamin und Aethylendiamin wurden als
Absorptionsmedien vorgeschlagen. Siehe dazu Johnstone, Ind.Eng.Chem.
27, 587 (1935), Johnstone et al.,Ind. Eng.Chem.30, 101 (1938),
Roberson et al., U.S. Bureau of Mines Rep. of Invest. 3415 (1938). Im
Falle der Verwendung von Sulfiten wird zur Desorption der beladenen
Absorptionslösung diese in der Regel zur Rückumwandlung des Bisulfits
in das Sulfit so weit eingedampft, dass das Sulfit in der Desorptionszone ausfällt. Diese Methode ist auch als Wellmann-Lord-Verfahren bekannt. Die Nachteile liegen darin, dass die Absorptionslösung nach
jeder Desorption wieder frisch eingestellt werden muss, und auch darin,
dass durch das jeweils nötige Eindampfen hohe Energieverluste entstehen.

Schliesslich sind auch Verfahren bekannt, die wie das erfindungsgemässe Verfahren als Absorptionsmedium wässrige Lösungen
von Aluminiumsalzen verwenden. Als Aluminiumsalze kommen in der
Regel basische Aluminiumverbindungen wie basische Aluminiumchloride
(Johnstone, Ind.Eng.Chem. 27, 587(1935))oder basische Aluminiumsulfate
(Applebey, J.Soc.Chem.Ind.Trans.56, 139(1937)) in Betracht.Ebenfalls
mit basischen Aluminiumsulfaten arbeitet das Verfahren gemäss britischer
Patentschrift 445,711 und U.S. Patentschrift 2,311,202. Die Desorption
erfolgt jeweils durch Erhitzen der Absorptionslösung, wobei auch ein
Inertgas oder auch Dampf durch letztere durchgeblasen werden kann.
In der britischen Patentschrift 445, 711 wird auch erwähnt, dass
das Erhitzen unter vermindertem Druck erfolgen kann. Ein weiteres
Verfahren zur Abtrennung von $SO_2$ aus Gasströmen durch Absorption mittels einer Lösung, die ein Metallsalz enthält, das mit dem $SO_2$ ein

- 5 -

instabiles Sulfit bildet, ist in der U.S. Patentschrift 1, 589,133 beschrieben. Als bevorzugte Absorptionslösung wird dabei eine Lösung von Aluminiumsulfit eingesetzt. Zur Desorption wird die beladene Lösung in einer Desorptionszone, die vorzugsweise als Turm mit übereinanderliegenden Böden bzw. Becken ausgebildet ist, mit einem Inertgas, vorzugsweise mit Wasserdampf behandelt, um das $SO_2$ auszutreiben. Weiter ist in dieser Patentschrift erwähnt, dass bei der Desorption zusätzlich Vakuum angelegt werden kann, ohne dass jedoch genauere Angaben über dessen Stärke gemacht werden.

Alle vorgenannten bekannten Verfahren haben, neben einzelnen bereits erwähnten Nachteilen, das Hauptproblem nicht gelöst, das bei der vorübergehenden Absorption von $SO_2$ in einem geeigneten Medium auftritt, nämlich die unerwünschte Sulfatbildung. Ein Teil des $SO_2$ wird nämlich in der Absorptionsflüssigkeit zu Sulfat oxidiert. Durch die Sulfatbildung sinkt der pH-Wert des Absorptionsmittels und damit auch dessen Aufnahmekapazität für $SO_2$. Deswegen muss das Sulfat aus dem Absorptionsmittelkreislauf ausgeschieden werden. Bei Anwesenheit von $Ca^{2+}$-Ionen kann es auch zur Ausfällung von Gips kommen und es besteht dabei die Gefahr von Verstopfungen in den Düsen, durch die die Flüssigkeit in die Absorptions- und Desorptionstürme versprüht wird. Weitere Nachteile der bekannten Verfahren bestehen darin, dass die verwendeten Absorptionslösungen ungenügende Stabilität aufweisen.

Aufgabe der vorliegenden Erfindung ist es, ein Verfahren zur Entfernung von $SO_2$ aus Abgasen unter Gewinnung von reinem $SO_2$ zu schaf-fen, das einerseits eine hohe Aufnahmekapazität bzw. Transportkapazität für $SO_2$ zwischen Absorption und Desorption und damit eine sichere Abgas-entschwefelung und einen wirtschaftlichen Betrieb einer solchen Anlage gewährleistet, das andererseits die unerwünschte Sulfatbildung im Absorptionsmittelkreislauf verhindert bzw. auf das Minimum reduziert und für eine ausreichende Stabilität der Absorptionslösung sorgt. Ferner soll ein solches Verfahren unter möglichst geringem Energieaufwand betrieben werden können. Die gestellten Aufgaben werden durch das nachfolgend beschriebene erfindungsgemässe Verfahren gelöst.

Die vorliegende Erfindung betrifft ein Verfahren zum Anreichern von $SO_2$, dass aus einem $SO_2$-haltigen Gasstrom mit Hilfe einer wässrigen, ein Aluminiumsalz enthaltenden Absorptionslösung in einer Absorptionszone abgetrennt wird, wobei die Absorptionslösung im Kreislauf zunächst durch eine Absorptionszone und darauf durch eine Desorptionszone geführt wird, und wobei aus der Desorptionszone unter Vergrösserung der Oberfläche der aus der Absorptionszone erhaltenen $SO_2$-haltigen Flüssigkeit ein wasserdampfhaltiger Gasstrom von angereichertem $SO_2$-Gehalt abgegeben wird, das dadurch gekennzeichnet ist, dass

a) als Absorptionslösung eine wässrige Lösung eines basischen Aluminiumsalzes eingesetzt wird, dessen Konzentration an $Al^{3+}$ in der Lösung zwischen 5 und 50 g/l beträgt,

b) in der Desorptionszone der Absolutdruck zwischen 0,08 und 0,7 bar gehalten wird und

c) die Differenz im $SO_2$-Gehalt der Absorptionslösung vor und nach der Desorptionszone zwischen 0,1 und 10 g/l beträgt.

Mit Hilfe des erfindungsgemässen Verfahrens können alle im technischen Massstab industriell anfallenden $SO_2$-haltigen Gase oder $SO_2$-haltige Abluft behandelt werden. Insbesondere Rauchgase oder Röstabgase, wie sie bei der Verbrennung von Brennstoffen mit geringem Schwefelgehalt oder beim Rösten von schwefelhaltigen Erzen, z.B. bei der Gewinnung von Kupfer, anfallen, oder auch bei anderen Industrieprozessen anfallende Abgase, die $SO_2$ enthalten, können so vom darin enthaltenen $SO_2$ befreit werden. Besonders zu erwähnen sind in diesem Zusammenhang auch Abgase aus Müllverbrennungsanlagen. Der Gehalt an $SO_2$ in den erwähnten Abgasen kann in weiten Grenzen schwanken. Er kann beispielsweise zwischen 100 ppm und 5% be-

- 7 -

tragen. Das Verfahren kann auch mit höheren $SO_2$-Konzentrationen ausgeführt werden, doch ist es in diesen Fällen wirtschaftlicher, das $SO_2$ in entsprechenden Anlagen direkt zu Schwefelsäure aufzuarbeiten. Besonders geeignet ist das erfindungsgemässe Verfahren zur Entschwefelung von $SO_2$-armen Abgasen, z.B. solchen, die 100 ppm bis 2%, besonders 0,1 bis 1% $SO_2$ enthalten.

Als Absorptionslösung wird im erfindungsgemässen Verfahren eine Aluminiumsalzlösung eingesetzt, die eine Konzentration zwischen 5 und 50 g $Al^{3+}$/l aufweist. Die Differenz zwischen dem $SO_2$-Gehalt in der Absorptionslösung nach der Desorptionszone und jenem vor der Desorptionszone beträgt zwischen 0,1 und 10 g/l, insbesondere zwischen 0,5 und 5 g/l (spezifische Transportkapazität der Absorptionslösung an $SO_2$ im System). Bevorzugte Konzentrationen an Aluminiumsalz in der Absorptionslösung liegen zwischen 10 und 40, insbesondere zwischen 15 und 30 g $Al^{3+}$/l Absorptionslösung.

Als Aluminiumsalzlösungen kommen vor allem wässrige Lösungen von basischen Aluminiumsalzen in Betracht. Beispiele dafür sind basische Aluminiumsulfate ,-chloride und vor allem -sulfite. Derartige Salze haben beispielsweise Zusammensetzungen, wie sie den folgenden hypothetischen Formeln entsprechen:
$(Al_2O_3)_x(SO_3)_y(H_2O)_z$, $(Al_2O_3)_{x'}(Cl)_{y'}(H_2O)_{z'}$ und $(Al_2O_3)_{x''}(SO_2)_{y''}(H_2O)_{z''}$;
x, y, z, x', y', z', x'', y'' und z'' entsprechen dabei beliebigen Zahlen, die jedoch so bemessen sind, dass das resultierende Salz noch basische Gruppen enthält. Bevorzugt werden Aluminiumsalze mit einer Basizität von höchstens 50%, vorzugsweise zwischen 20 und 50, insbesondere zwischen 35 und 40%.

Eine besonders bevorzugte Absorptionslösung wird folgendermassen erhalten: Aluminiumpulver wird, gegebenenfalls unter Zugabe eines Netz- oder/und Dispergiermittels in Wasser suspendiert; in diese Suspension wird $SO_2$ eingeleitet und die Suspension anschliessend erhitzt, vorzugsweise auf 50-100, insbesondere auf 80-90°C; der in der Suspension enthaltene Feststoffanteil wird durch Filtration entfernt und die klare
Lösung als Absorptionslösung im erfindungsgemässen Verfahren eingesetzt. Die genannte Lösung ist ebenfalls Gegenstand der vorliegenden
Erfindung.

Der pH-Wert der im erfindungsgemässen Verfahren eingesetzten
Absorptionsflüssigkeit liegt vorzugsweise zwischen 2 und 6. Falls die
Aluminiumsalzlösung nicht ohnehin einen pH-Wert in diesem Bereich aufweist, kann der gewünschte pH-Wert durch Zugabe von Säure bzw. Base,
beispielsweise Schwefelsäure oder Natronlauge, korrigiert werden. Besonders bevorzugt führt man das erfindungsgemässe Verfahren mit einer
Absorptionslösung aus, die einen pH-Wert zwischen 2,5 und 4 aufweist.

Sofern die zu reinigenden Gase keine störenden Verunreinigungen, sondern im wesentlichen nur $SO_2$ enthalten, können sie direkt
in der Absorptionszone mit der Absorptionsflüssigkeit in Kontakt gebracht werden, wobei es jedoch zweckmässig ist, sehr heisse Rauchgase
vorher abzukühlen, damit sie in der Absorptionszone nicht heisser als
60°C sind, da ansonsten die Absorptionskapazität der Flüssigkeit
erniedrigt werden könnte.

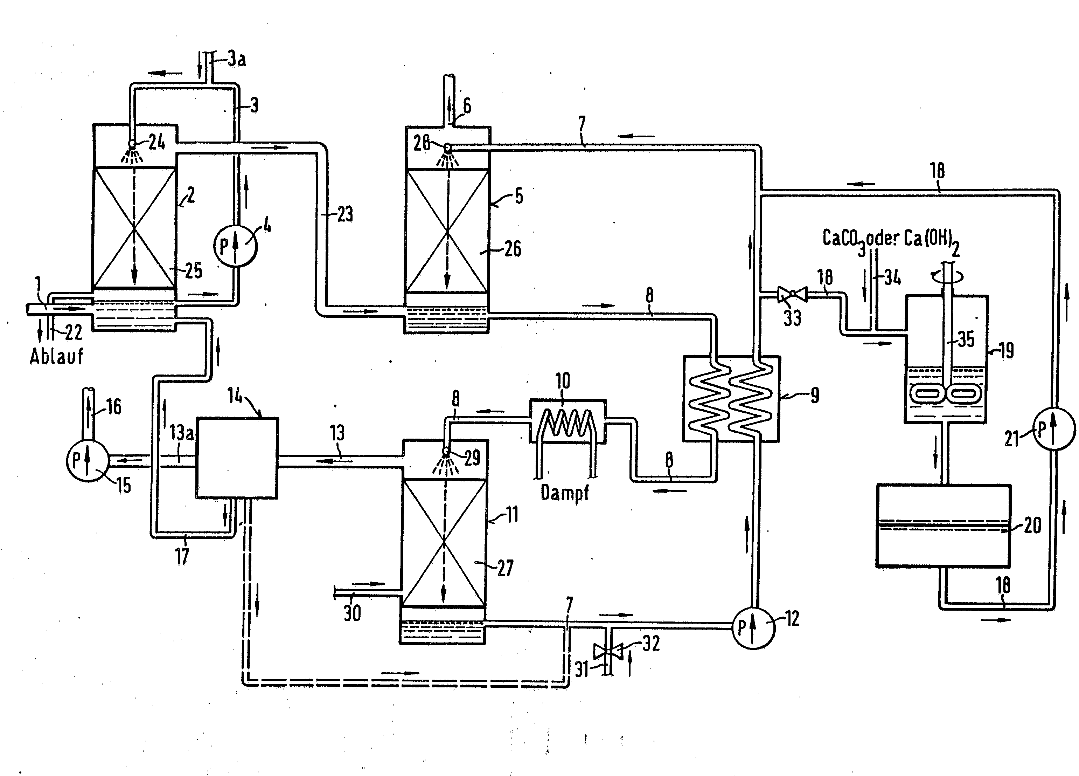

In der Regel enthalten die zu reinigenden Gase jedoch feste
Teilchen, sowie vor allem saure Verunreinigungen wie $SO_3$, HCl,
HBr, HF oder/und $H_3PO_4$. Diese Verunreinigungen können in einer Vorbehandlungszone, z.B. in einem Vorwäscher (scrubber) entfernt bzw.
ausgewaschen werden. Für diese Nasswäsche werden vorzugsweise Einrichtungen verwendet, wie sie von Fattinger, Schmitz und Schneider
in der Publikation Nr. 107 "Technik der Abgasreinigung" der "Tagung
Lufthygiene 1976" vom 3. Dezember 1976 des Verlages VFWL (Verein für
Wasser- und Lufthygiene), Huttenstrasse 36, 8006 Zürich, Schweiz, beschrieben sind (siehe Figuren 1 bis 4). Es kann vor allem ein solcher
Turm mit dem ebendort beschriebenen X-Abscheider oder Ring-Jet verwendet werden. Es können beispielsweise auch Waschtürme eingesetzt
werden, wie sie in den deutschen Offenlegungsschriften 28 49 607 und 28 51 176 beschrieben sind. Als Waschflüssigkeit wird in der Regel Wasser benutzt, das durch Absorption der sauren Bestandteile des Abgases sehr schnell auf einen pH-Wert unter 2, insbesondere um 1 gebracht wird. Sollte es nötig sein (zu wenige saure Gase im Abgas), kann die Waschlösung auch von vornherein auf einen pH-Wert von unter 2 gebracht werden. Dies ist erforderlich, da bei höheren pH-Werten bereits $SO_2$ von der Waschflüssigkeit absorbiert würde. Die zu reinigenden Abgase werden von unten in den Waschturm eingeleitet, in den die Waschflüssigkeit von oben eingesprüht wird. Der Vorwaschturm hat auch die Aufgabe, die eintretenden Gase abzukühlen, damit sie in die Absorptionszone mit nicht zu hohen Temperaturen eintreten.

Der vorgereinigte Abgasstrom wird nun vorzugsweise von unten in die Absorptionszone eingeleitet, die in einer bevorzugten Ausführungsform aus einem Füllkörperturm besteht, der eine oder mehrere Füllkörperschichten aus beliebigen Füllkörperelementen enthalten kann. Zweckmässig wird die oberste Füllkörperschicht im Turm mit der Absorptionslösung berieselt, wobei letztere beim Herabfliessen durch die Füllkörperschichten das im Gasstrom vorhandene $SO_2$ aufnimmt. Die Temperatur der Gase in der Absorptionszone sollte nicht über 60°C liegen, vorzugsweise sollte sie weniger als 50°C betragen. Die Abkühlung der Gase erfolgt zweckmässig in der Vorwaschanlage, falls eine solche vorhanden ist.

Um eine möglichst vollständige Absorption zu erreichen, wird der Gasstrom vorzugsweise derart durch die Absorptionszone geführt, dass die mittlere Verweilzeit je Volumeneinheit darin 2 bis 20, insbesondere 5 bis 15 Sekunden beträgt.

Der die Absorptionszone verlassende Gasstrom kann in der Regel ohne weitere Behandlung an die Umgebungsluft abgegeben werden.

Die mit $SO_2$ beladene Absorptionsflüssigkeit wird über eine Leitung zur Desorptionszone geführt. Je nach Temperatur der Flüssigkeit kann diese noch etwas erwärmt werden, um eine bessere Desorption zu erreichen. Im allgemeinen soll die Absorptionsflüssigkeit jedoch nicht über 85°C, vorzugsweise nicht über 75°C erhitzt
werden, da höhere Temperaturen die Sulfatbildung aus $SO_2$ erleichtern.

Um die Sulfatbildung noch sicherer zu unterbinden, wird in
einer bevorzugten Ausführungsform des erfindungsgemässen Verfahrens
die Zeit, in der die beladene Absorptionslösung eine Temperatur von
über 60°C aufweist, unter 10 Sekunden, vorzugsweise unter 3 Sekunden,
insbesondere unter 1 Sekunde gehalten. Dies kann dadurch bewerkstelligt werden, dass die Erwärmung der Absorptionsflüssigkeit erst
unmittelbar vor der Desorptionszone erfolgt und/oder dass die
Strömungsgeschwindigkeit der Flüssigkeit entsprechend eingestellt wird.

In der Desorptionszone wird das in der Absorptionslösung enthaltene $SO_2$ durch Vergrösserung der Oberfläche der Flüssigkeit desorbiert. Dies geschieht im erfindungsgemässen Verfahren dadurch, dass die
beladene Absorptionsflüssigkeit in eine Desorptionszone eingebracht,
vorzugsweise eingesprüht wird, in der ein Absolutdruck zwischen 0,08
und 0,7 bar herrscht. In einer bevorzugten Ausführungsform beträgt
der Druck in der Desorptionszone zwischen 0,08 und 0,5, insbesondere
zwischen 0,2 und 0,4 bar.

Als Desorptionszone kann im einfachsten Fall ein leerer
Behälter, insbesondere ein leerer Turm dienen, in dessen Inneren
der benötigte Unterdruck aufrechterhalten wird und in den die beladene
Absorptionslösung eingeleitet wird.

In einer bevorzugten Ausführungsform besteht die Desorptionszone jedoch aus einem oder mehreren Füllkörpertürmen, insbesondere aus
einem Füllkörperturm, der eine oder mehrere Füllkörperschichten enthält.
Die Füllkörperschichten können beliebige bekannte Füllkörperelemente
enthalten. Die mit $SO_2$ beladene Absorptionsflüssigkeit wird in den Turm
oder die Türme, worin das oben definierte Vakuum herrscht, eingeleitet,
vorzugsweise eingesprüht. Das in der Absorptionslösung gebundene $SO_2$

wird in der Desorptionszone freigesetzt und verlässt diese im Gemisch mit Wasserdampf.

In die Desorptionszone kann zur Verbesserung der Desorption zusätzlich zum angelegten Vakuum auch noch ein inertes, kondensierbares Gas, vorzugsweise Wasserdampf eingeleitet werden. Diese Variante kann in Fällen vorgesehen werden, in denen das $SO_2$ durch die Vakuumdesorption allein ungenügend desorbiert wird.

Zur Verbesserung der Energiebilanz der Anlage, in der das erfindungsgemässe Verfahren ausgeführt wird, kann der gegebenenfalls in die Desorptionszone eingeleitete Wasserdampf durch Vakuumverdampfung von in einer Leitung zirkulierendem Kreislaufwasser erzeugt werden, das zur Kühlung und Vorreinigung der Eintrittsgase in der der Absorptionszone vorgeschalteten Vorreinigungsanlage (Vorwäscher) dient und das dadurch schon eine erhöhte Temperatur aufweist.

Die die Desorptionszone verlassende, von $SO_2$ weitgehend befreite Absorptionsflüssigkeit wird in die Desorptionszone zurückgeleitet, wo sie weiteres $SO_2$ aus dem gegebenenfalls vorgereinigten Eintrittsgasstrom aufnimmt.

Das die Desorptionszone verlassende Gemisch aus $SO_2$ und Wasserdampf kann zur weiteren Aufarbeitung durch einen oder mehrere Kondensatoren geleitet werden, worin der Wasserdampf auskondensiert. Das $SO_2$ kann in reiner Form aus dem Kondensator oder den Kondensatoren abgezogen werden. Das darin auskondensierte Wasser wird vorzugsweise in die Vorreinigungszone (den Vorwäscher) zurückgeleitet. Da das Kondenswasser noch gewisse Mengen an $SO_2$ enthalten kann, kann es in einer alternativen Ausführungsform auch in einen Waschturm geleitet werden, in dem es durch entgegenströmende Luft ("Strippen") weitgehend von gelöstem $SO_2$ befreit wird. Der aus dem Waschturm entweichende $SO_2$/Luft-Strom wird dann vorzugsweise in den Eintrittsgasstrom vor der Absorptionszone eingeleitet. Das nun von $SO_2$ weit-

gehend befreite Wasser kann wie oben beschrieben in den Vorwäscher eingeleitet werden.

Wie bereits weiter oben erwähnt, zeichnet sich das erfindungsgemässe Verfahren vor allem dadurch aus, dass, im Gegensatz zu bekannten Verfahren, die Bildung von Sulfat in der Absorptionsflüssigkeit
ausserordentlich gering ist und der optimale pH-Wert über lange Zeit
konstant bleibt. Dennoch kann es nach längerer Betriebsdauer auch beim
erfindungsgemässen Verfahren zu einer gewissen Sulfatbildung und zum
Absinken des pH-Wertes kommen. Deshalb kann an den Absorptionsmittelkreislauf eine Sulfatreinigungsanlage angeschlossen werden. Dazu wird
zur Abscheidung von gegebenenfalls im Absorptionsflüssigkeitskreislauf
gebildetem Sulfat und zur Aufrechterhaltung des optimalen pH-Wertes
periodisch eine Teilmenge der Absorptionsflüssigkeit aus dem Kreislauf
in ein Mischgefäss abgezogen und darin mit einem geeigneten Fällungsmittel, vorzugsweise $CaCO_3$ oder $Ca(OH)_2$, das Sulfat ausgefällt, das
gebildete schwerlösliche Sulfat anschliessend abgetrennt (z.B. in einer
Filterpresse) und die gereinigte Absorptionsflüssigkeit wieder dem
Kreislauf zugeführt. Die Steuerung der Reinigung der Absorptionsflüssigkeit kann beispielsweise über deren pH-Wert erfolgen. Bei
Unterschreiten eines bestimmten Wertes, z.B. eines beliebig angenommenen
Wertes zwischen 2 und 3, kann das oben erwähnte Abziehen einer
Teilmenge der Absorptionsflüssigkeit über ein durch den pH-Wert gesteuertes Ventil erfolgen.

Im Zusammenhang mit der Sulfatbildung im Absorptionsmittelkreislauf sei noch auf einen besonderen Vorteil der oben beschriebenen erfindungsgemässen Absorptionslösung (erhalten durch Suspension von Aluminiumpulver in Wasser, gegebenenfalls unter Zugabe
eines Netz- oder/und Dispergiermittels, Einleiten von $SO_2$ in diese
Suspension, Erhitzen derselben, vorzugsweise auf 80-90°C und Entfernung des Feststoffanteils durch Filtration) hingewiesen: Durch
die Bildung von Sulfat im Absorptionsmittelkreislauf entsteht durch
vorhandene Ca-Ionen das in Wasser schwer lösliche $CaSO_4$. In praktisch
allen bekannten wässrigen Systemen weist die Löslichkeit von $CaSO_4$

bei mässig erhöhten Temperaturen, z.B. bei ca. 50 bis 80°C, ein Minimum auf. Dies führt, wenn übliche Absorptionsmittel verwendet werden, zu der unangenehmen Erscheinung, dass in jenem Teil des Absorptionsmittelkreislaufes, in dem das beladene Absorptionsmittel leicht erhitzt wird (vor der Desorptionszone), $CaSO_4$ ausgefällt und damit dort angereichert wird, was nach einiger Zeit zur Blockierung des Absorptionsmittelkreislaufes führen kann. Im Gegensatz dazu zeigt die Temperaturabhängigkeit der Löslichkeit von $CaSO_4$ in der oben beschriebenen erfindungsgemässen Absorptionsflüssigkeit ein lineares Verhalten, d.h. die Löslichkeit nimmt proportional mit der Temperatur zu. Daher tritt das eben beschriebene Problem überhaupt nicht auf, wenn die erfindungsgemässe Absorptionsflüssigkeit verwendet wird.

Weitere Einzelheiten der Erfindung sind aus der folgenden Beschreibung im Zusammenhang mit der beigefügten Zeichnungsfigur ersichtlich, welche schematisch eine bevorzugte Ausführungsform einer Anlage zur Durchführung des erfindungsgemässen Verfahrens zeigt.

Durch die Gasleitung 1 gelangt das zu reinigende Gas (z.B. Rauchgas) in den Vorwäscher 2, worin es von Staub und sauren Gasen wie HCl, HF, $H_2SO_4$ und $H_3PO_4$ gereinigt wird. Die saure Waschflüssigkeit wird mit Hilfe der Pumpe 4 durch die Leitung 3 in einem Kreislauf gefördert. Die Waschflüssigkeit wird durch die Sprühdüse 24 in den Vorwäscher eingesprüht und rieselt durch die Füllkörperschicht 25, in der gegebenenfalls auch X-Abscheider angeordnet sind, abwärts, wobei sie aus dem entgegenströmenden Gas Staubteilchen und saure Verunreinigungen auswäscht. Die Waschflüssigkeit sammelt sich am Boden des Vorwäschers 2 (Sumpf), von wo sie weiter durch die Leitung 3 wieder zur Sprühdüse 24 gepumpt wird. Durch das Ueberlaufrohr 22 fliesst überflüssige Waschlösung ab, so dass das Volumen der Waschlösung konstant bleibt. Durch die Zuleitung 3a kann dem Kreislauf gegebenenfalls neue Waschflüssigkeit zugesetzt werden. Verbrauchte Waschflüssigkeit, die über den Ueberlauf 22 abfliesst, kann verworfen werden oder aber nach Neutralisierung als Nutzwasser an einer entsprechenden Stelle der Anlage wieder zugeführt werden.

- 14 -

Die im oberen Teil des Vorwäschers 2 austretenden Gase werden über die Gasleitung 23 in den unteren Teil des mit einer Füllkörperschicht 26 versehenen Absorptionsturmes 5 eingebracht. Ueber die Leitung 7 wird aus der Desorptionszone eine $SO_2$-arme Absorptionsflüssigkeit mit Hilfe der Pumpe 12 zur Sprühdüse 28 geleitet, durch die sie im Absorptionsturm versprüht wird. Das zu reinigende Gas wird in der Füllkörperschicht 26 durch Gegenstromwäsche mit der Absorptionsflüssigkeit weitgehend von $SO_2$ befreit. Der gereinigte, weitgehend $SO_2$-freie Gasstrom wird durch die Leitung 6 abgelassen. Die mit $SO_2$ beladene Absorptionsflüssigkeit sammelt sich am Boden des Absorptionsturmes 5 (Sumpf) und wird über die Leitung 8 zunächst durch den Wärmeaustauscher 9, in dem unter Ausnützung der von der über die Leitung 7 zurückströmenden, von $SO_2$ befreiten Absorptionsflüssigkeit abgegebenen Wärme eine Vorwärmung der mit $SO_2$ beladenen Absorptionsflüssigkeit stattfindet, und anschliessend durch den mit Wasserdampf beheizten Wärmeaustauscher 10 und schliesslich in den mit einer Füllkörperschicht 27 versehenen Desorptionsturm 11 geleitet. Im Wärmeaustauscher 10 wird die beladene Absorptionsflüssigkeit erwärmt, und zwar auf eine Temperatur unter 85°C, vorzugsweise unter 75°C.

Am oberen Ende des Desorptionsturmes 11 wird die mit $SO_2$ beladene Absorptionsflüssigkeit mit Hilfe der Sprühdüse 29 auf die Füllkörperschicht 27 gesprüht. Im Desorptionsturm 11 wird mit Hilfe der im Gasstrom stromab eines Kondensators 14 angeordneten Vakuumpumpe 15 der benötigte Absolutdruck zwischen 0,08 und 0,7 bar aufrechterhalten. Gegebenenfalls kann zusätzlich durch die Zuleitung 30 Wasserdampf in den Desorptionsturm 11 eingeleitet werden.

Das im Desorptionsturm 11 freigesetzte $SO_2$ verlässt diesen Turm zusammen mit Wasserdampf über die Leitung 13, die in den Kondensator 14 mündet. Im Kondensator 14, der beispielsweise mit fliessendem kaltem Wasser gekühlt wird, kondensiert der grösste Teil des gemeinsam mit dem $SO_2$ aus dem Desorptionsturm 11 kommenden Wasserdampfes aus. Das nunmehr praktisch reine $SO_2$ verlässt den Kondensator 14 über die Leitung 13a durch die Vakuumpumpe 15 und wird über die Leitung 16 aus der Anlage zur Weiterverarbeitung z.B. auf Schwefelsäure abgezogen. Das im Kondensator 14 abgeschiedene Wasser wird über die Leitung 17 in den Vorwäscher 2 eingeleitet. Da das im Kondensator 14 abgeschiedene Wasser noch etwas $SO_2$ enthält, kann vor dem Vorwäscher 2 ein in der Zeichnungsfigur nicht dargestellter Waschturm eingebaut werden, in dem die Leitung 17 mündet. Das durch letztere geleitete Wasser kann in diesem Waschturm durch entgegenströmende Luft ("Strippen") weitgehend vom gelösten $SO_2$ befreit werden. Der entstehende $SO_2$/Luft-Strom kann dann vor dem Absorptionsturm in die Gasleitung 23 geführt werden. Das im Waschturm anfallende, nunmehr praktisch $SO_2$-freie Wasser wird dann, wie oben beschrieben, in den Vorwäscher 2 eingeleitet.

Alternativ kann ein Teil des aus dem Kondensator 14 abfliessenden auskondensierten Wassers über eine in der Zeichnung gestrichelte dargestellte Zweigleitung zwischen der Leitung 17 und der Leitung 7 in den Absorptionsmittelkreislauf geführt werden.

Am Boden des Desorptionsturmes 11 (Sumpf) sammelt sich die $SO_2$-arme Absorptionsflüssigkeit und wird von dort mit Hilfe der Pumpe 12 durch die Leitung 7 zurück zum Absorptionsturm 5 geführt, wobei sie den Wärmeaustauscher 9 durchströmt, in welchem sie einen Teil ihrer Wärme an die ebenfalls durch den Wärmeaustauscher 9 fliessende, mit $SO_2$ beladene Absorptionsflüssigkeit abgibt. Durch die Zuleitung 31 kann, gesteuert durch das Ventil 32, je nach Bedarf neue Absorptionslösung oder Wasser (zur Aenderung der Konzentration an Aluminiumsalz in der Absorptionslösung) in den Absorptionsmittelkreislauf (Leitung 7) eingespeist werden.

Zur Ausschleusung von nach längerer Betriebszeit im Absorptionsmittelkreislauf gebildetem Sulfat ist, ausgehend von der Leitung 7 des Absorptionsmittelkreislaufes, ein Sulfat-Reinigungskreislauf vorgesehen. Dazu zweigt eine Leitung 18 von der Leitung 7 ab. Je nach Sulfatgehalt der Absorptionslösung kann eine Teilmenge derselben über das Ventil 33 in die Leitung 18 abgezweigt werden. Das

- 16 -

Ventil 33 wird zweckmässig über den pH-Wert der Absorptionslösung gesteuert. Man gibt etwa einen beliebigen pH-Wert zwischen 2 und 3 vor, bei dessen Unterschreitung sich das Ventil 33 öffnet und einen Teilstrom der Absorptionslösung über die Leitung 18 zum Absetzgefäss 19 fliessen lässt. Durch die Leitung 34 wird besagtem Teilstrom eine Suspension eines geeigneten Fällungsmittels für Sulfat, vorzugsweise $CaCO_3$ oder $Ca(OH)_2$ zugesetzt. Die nun $CaSO_4$ enthaltende Suspension gelangt in den mit einem Rührer 35 versehenen Absetzbehälter 19 und anschliessend auf ein Filter 20 (z.B. eine Filterpresse), wo das feste $CaSO_4$ von der Absorptionslösung abgetrennt wird. Die gereinigte filtrierte Absorptionslösung wird mit Hilfe der Pumpe 21 durch die Leitung 18 in die Leitung 7 des Absorptionsmittelkreislaufes zurückgeführt.

Die nachfolgenden Beispiele illustrieren die Absorption und Desorption von $SO_2$, wie sie im erfindungsgemässen Verfahren durchgeführt wird, näher. Ausserdem wird die Herstellung der erfindungsgemässen, Aluminium und Sulfit enthaltenden Absorptionslösung beispielsweise erläutert.

Beispiel 1: Ein Strom von 200 $m_N^3$/h Rauchgas aus einer Lösungsmittelverbrennung mit einem Gehalt von durchschnittlich 3000 ppm $SO_2$ wird bei 30°C in dem im Gegenstrom betriebenen Füllkörperturm 5 (Absorptionsturm) mit einer Aluminium-haltigen Sulfitlösung (hergestellt nach Beispiel 3) mit einer $Al^{3+}$-Konzentration von 25 g/l und einem pH-Wert von 3,2 bis auf einen Restgehalt von 200-300 ppm ausgewaschen, wobei das Durchflussvolumen der Absorptionslösung 300 l/h beträgt. Die $SO_2$-Beladung der Absorptionslösung beträgt dann 4-7 g/l, der pH-Wert liegt zwischen 3,0 und 3,2. Die mit $SO_2$ beladene Al-haltige Sulfitlösung wird im Wärmeaustauscher 10 auf 60-70°C erhitzt und über eine Düse in den Desorptionsturm 11 eingespritzt, in dem der Absolutdruck bei 0,2 bar gehalten wird und in dem die Absorptionslösung zusätzlich im Gegenstrom mit 10 $m^3$/h Wasserdampf von 62°C gestrippt wird. Nach der Desorption beträgt die $SO_2$-Beladung der Absorptionsflüssigkeit 2-5 g/l, der pH-Wert derselben 2,5-2,8 und die Temperatur im Sumpf

- 17 -

des Desorptionsturmes 52-57°C. Im Wärmeaustauscher 9 wird die Absorptionslösung auf 30°C gekühlt und in den Absorptionsturm 5 zurückgeführt.

Beispiel 2: Ein Strom von 100 $m_N^3$/h Rauchgas aus einer Lösungsmittelverbrennung mit einem Gehalt von durchschnittlich 3000 ppm $SO_2$ wird bei 35°C in dem im Gegenstrom betriebenen Füllkörperturm 5 )Absorptionsturm) mit einer Aluminium-haltigen Sulfitlösung (hergestellt nach Beispiel 3) mit einem $Al^{3+}$-Gehalt von 25 g/l bis auf einen Restgehalt von 150-200 ppm $SO_2$ ausgewaschen, wobei das Durchfluss- volumen der Absorptionslösung 300 l/h beträgt. Die $SO_2$-Beladung der Absorptionslösung beträgt dann 3,5-5 g/l, der pH-Wert 2,8-3,1. Die mit $SO_2$ beladene Absorptionslösung wird im Wärmeaustauscher 10 auf 60-70°C erhitzt und über eine Düse in den Desorptionsturm 11 einge- spritzt, in dem der Absolutdruck bei 0,2 bar gehalten wird und in dem die Absorptionslösung zusätzlich im Gegenstrom mit 10 $m^3$/h Wasserdampf von 62°C gestrippt wird. Nach der Desorption beträgt die $SO_2$-Beladung der Absorptionslösung 2-3,5 g/l, der pH-Wert derselben 2,4-2,6 und die Temperatur im Sumpf der Kolonne 53-56°C. Im Wärmeaustauscher 9 wird die Al-haltige Sulfitlösung auf 35°C abgekühlt und in den Absorptionsturm 5 zurückgeführt.

Beispiel 3: Herstellung der Al-haltigen Sulfitlösung.
5 l destilliertes Wasser und 100 mg eines Anlagerungsproduktes von 8,6 Mol Aethylenoxid an 1 Mol sulfoniertes 1-Methyl-2-heptadecyl-benzimidazol (Dispergator) werden vorgelegt und unter Rühren 30 g Al-Pulver zugegeben. Dann werden bei Raumtemperatur mit einer Geschwindigkeit von 1,4 l/h insgesamt 468 g $SO_2$ eingeleitet. Das restliche Aluminium- pulver wird portionenweise zugegeben. Insgesamt werden 145 g Al einge- setzt. Nach beendeter $SO_2$-Dosierung wird das Reaktionsgemisch während 48 h bei 80°C gerührt. Dabei bildet sich ein Niederschlag, der nach dem Abkühlen auf Raumtemperatur durch Filtrieren von der Lösung abgetrennt wird. Der komplexometrisch bestimmte $Al^{3+}$-Gehalt der abge-

- 18 -

trennten Lösung beträgt 26 g/l (theoretisch 29 g/l). Ihr pH-Wert beträgt 3,1.


Beispiel 4: Ein Strom von 1,25 $m_N^3$/h eines Luft/$SO_2$-Gemisches mit einem Gehalt von 2100 ppm $SO_2$ wird bei 26°C in dem im Gegenstrom betriebenen Füllkörperturm 5 (Absorptionsturm) mit einer basischen Aluminiumsulfatlösung mit einer Basizität von 50% und einer Konzentration von 42,2 g $Al^{3+}$/l bis auf einen Restgehalt von 200 ppm $SO_2$ ausgewaschen, wobei das Durchflussvolumen der Absorptionslösung 3,75 l/h beträgt. Die $SO_2$-Beladung der Absorptionslösung beträgt dann 2-3 g/l, der pH-Wert 3,0-3,5. Die mit $SO_2$ beladene, basische Aluminiumsulfatlösung wird in einem Wärmeaustauscher auf 70°C erhitzt und über eine Düse in den Desorptionsturm 11 eingesprüht, in dem der Absolutdruck auf 0,2 bar gehalten wird. Nach der Desorption beträgt die $SO_2$-Beladung 1,5-2,5 g/l und die Temperatur im Sumpf 30°C. In einem Wärmeaustauscher wird die basische Aluminiumsulfatlösung auf 26°C abgekühlt und in den Absorptionsturm 5 zurückgeleitet.

Patentansprüche:

1.    Verfahren zum Anreichern von $SO_2$, das aus einem $SO_2$-haltigen Gasstrom mit Hilfe einer wässrigen, ein Aluminiumsalz enthaltenden Absorptionslösung in einer Absorptionszone abgetrennt wird, wobei die Absorptionslösung im Kreislauf zunächst durch eine Absorptionszone und darauf durch eine Desorptionszone geführt wird, und wobei aus der Desorptionszone unter Vergrösserung der Oberfläche der aus der Absorptionszone erhaltenen $SO_2$-haltigen Flüssigkeit ein wasserdampfhaltiger Gasstrom von angereichertem $SO_2$-Gehalt abgegeben wird, dadurch gekennzeichnet, dass

a) als Absorptionslösung eine wässrige Lösung eines basischen Aluminiumsalzes eingesetzt wird, dessen Konzentration an $Al^{3+}$ in der Lösung zwischen 5 und 50 g/l beträgt,

b) in der Desorptionszone der Absolutdruck zwischen 0,08 und 0,7 bar gehalten wird und

c) die Differenz im $SO_2$-Gehalt der Absorptionslösung vor und nach der Desorptionszone zwischen 0,1 und 10 g/l beträgt.

2.    Verfahren nach Anspruch 1, dadurch gekennzeichnet, dass die Absorptionsflüssigkeit einen pH-Wert zwischen 2 und 6, aufweist.

3.    Verfahren nach Anspruch 1, dadurch gekennzeichnet, dass der $SO_2$-haltige Gasstrom mit einer solchen Geschwindigkeit durch die Absorptionszone geführt wird, dass die mittlere Verweilzeit je Volumeneinheit darin 2 bis 20 Sekunden beträgt.

4.    Verfahren nach Anspruch 1, dadurch gekennzeichnet, dass der Gasstrom von unten in die Absorptionszone, die als Füllkörperturm ausgebildet ist, eingeleitet wird, worin er der von oben eingesprühten Absorptionslösung entgegenströmt.

5. Verfahren nach Anspruch 1, dadurch gekennzeichnet, dass die mit $SO_2$ beladene Absorptionsflüssigkeit vor dem Eintritt in die Desorptionszone auf eine Temperatur von höchstens 85°C gebracht wird.

6. Verfahren nach Anspruch 5, dadurch gekennzeichnet, dass die Zeit, in der die beladene Absorptionslösung eine Temperatur von über 60°C aufweist, unter 10 Sekunden beträgt.

7. Verfahren nach Anspruch 1, dadurch gekennzeichnet, dass zusätzlich ein kondensierbares Gas in den als Desorptionszone dienenden Turm geleitet wird.

8. Verfahren nach Anspruch 7, dadurch gekennzeichnet, dass als kondensierbares Gas in den Desorptionsturm geleiteter Wasserdampf durch Vakuumverdampfung von in einer Leitung zirkulierendem Kreislaufwasser erzeugt wird, das zur Kühlung und Vorreinigung der eintretenden Gase in einer der Absorptionszone vorgeschalteten Vorreinigungsanlage dient und sich dabei erwärmt.

9. Verfahren nach Anspruch 1, dadurch gekennzeichnet, dass der aus der Desorptionszone austretende wasserdampfhaltige $SO_2$-Strom durch einen Kondensator geleitet wird, in dem ein Grossteil des Wasserdampfes kondensiert.

10. Verfahren nach Anspruch 9, dadurch gekennzeichnet, dass das noch $SO_2$ enthaltende Kondensat in einen Waschturm eingeleitet wird, in dem es von einem Teil des noch darin gelösten $SO_2$ durch Strippen mit entgegenströmender Luft befreit wird.

11. Verfahren nach Anspruch 10, dadurch gekennzeichnet, dass ein Teil des vom $SO_2$ befreiten Kondensats einem Vorwäscher zugeleitet wird, in dem der $SO_2$-haltige Gasstrom vor der Absorption vorgereinigt wird, und ein anderer Teil des vom $SO_2$ befreiten Kondensats dem Absorptionsflüssigkeitskreislauf zugeführt wird.

12.     Verfahren nach Anspruch 1, dadurch gekennzeichnet, dass man als Absorptionsflüssigkeit eine wässrige Lösung von basischem Aluminiumchlorid, -sulfat oder -sulfit mit einer Basizität von höchstens 50% oder eine wässrige, aluminiumsalzhaltige Lösung einsetzt, die durch Suspendieren von Aluminiumpulver in Wasser, gegebenenfalls unter Zugabe eines Netz- oder/und Dispergiermittels, Einleiten von $SO_2$ in diese Suspension, Erhitzen derselben, vorzugsweise auf 80-90°C, und Entfernung des Feststoffanteils durch Filtration erhalten wird.

CaCO$_3$ oder Ca(OH)$_2$

Ablauf

Dampf

0038779
1/1

# EUROPÄISCHER RECHERCHENBERICHT

**Europäisches Patentamt**

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | US - A - 2 173 877 (A.M. CLARK et al.) <br> * ganzes Dokument * <br> --- | 1 | B 01 D 53/34 <br> C 01 B 17/60 |
| D | US - A - 1 589 133 (A.H. EUSTIS) <br> * ganzes Dokument * <br> --- | 1 | |
| A | US - A - 3 790 660 (C.B. EARL et al.) <br> & DE - C - 2 208 102 <br> --- | | |
| A | FR - A - 1 557 835 (UGINE KUHLMANN) <br> & DE - A - 1 817 015 <br> -- | | **RECHERCHIERTE SACHGEBIETE (Int. Cl.³)** <br><br> B 01 D 53/34 <br> C 01 B 17/60 |
| A | FR - A - 1 544 552 (BECKWELL PROCESS CORP.) <br> -- | | |
| A | FR - A - 2 010 926 (CHEMICAL CONS-TRUCTION CORP.) <br> & DE - A - 1 930 109 <br> -- | | |
| A,D | DE - A1 - 2 830 214 (CIBA-GEIGY AG) <br> -- | | |
| A,D | DE - A - 1 567 462 (DUISBURGER KUPFER-HÜTTE) <br> -- | | **KATEGORIE DER GENANNTEN DOKUMENTE** <br> X: von besonderer Bedeutung <br> A: technologischer Hintergrund <br> O: nichtschriftliche Offenbarung <br> P: Zwischenliteratur |
| A,D | DE - A1 - 2 448 056 (BOLIDEN AB) <br> -- | | T: der Erfindung zugrunde liegende Theorien oder Grundsätze |
| A,D | DE - A1 - 2 623 963 (BAYER AG) <br> ---- | | E: kollidierende Anmeldung <br> D: in der Anmeldung angeführtes Dokument <br> L: aus andern Gründen angeführtes Dokument |
| [X] | Der vorliegende Recherchenbericht wurde für alle Patentansprüche erstellt. | | &: Mitglied der gleichen Patent-familie, übereinstimmendes Dokument |
| Recherchenort <br> Berlin | Abschlußdatum der Recherche <br> 26-06-1981 | | Prüfer <br> ASSOGNA |

EPA form 1503.1  06.78